# EUROPEAN PATENT APPLICATION

(11) **EP 2 398 185 A1**
(43) Date of publication of application: **21.12.2011**
(21) Application number: 10741025.0
(22) Date of filing: 19.01.2010
(51) Int. Cl.: H04L 12/24

(54) **ACCESS NODE MONITORING CONTROL APPARATUS, ACCESS NODE MONITORING SYSTEM, METHOD, AND PROGRAM**

(30) Priority: 13.02.2009 JP 2009031949
(71) Applicant: NEC Corporation, Tokyo 108-8001 (JP)
(72) Inventor: OZAKI, Hirokazu, Tokyo 108-8001 (JP)
(74) Representative: Betten & Resch
(86) International application number: PCT/JP2010/000264
(87) International publication number: WO 2010/092745

(57) **Abstract**

Disclosed is an access node monitoring control apparatus for monitoring a plurality of access node devices that each include one or more interface cards corresponding respectively to a plurality of users. This apparatus includes SLA information storage means for storing information about reiiability-related SLAs signed by the users; fault information receiving means for receiving information about faults in a device used to provide communication services to the users; fault history storage means for storing a history of faults indicated by the information received by the fault information receiving means in association with the users affected by the faults; and next maintenance operation determination means for determining the next maintenance operation in accordance with information about a currently faulty device, information about an SLA for a user affected by a fault in the faulty device, and a fault history associated with the user.

## Description

### Technical Field

The present invention relates to an access node monitoring control apparatus, access node monitoring system, access node monitoring method, and access node monitoring program for monitoring an access node apparatus.

### Background Art

Now that the Internet is used as a social infrastructure for various purposes, it is demanded that service providers sign an SLA (service level agreement), which includes a reliability index, with a user and provide services in accordance with the SLA.

It is generally demanded that carrier-grade reliability ensure 99.999% of availability. This high level of reliability indicates that service disrupts for a period of approximately 5 minutes per year. Therefore, when a fault occurs, it is demanded that fault recovery be achieved in minutes. In addition, it is necessary to maintain service fairness among a plurality of users who have signed the same SLA.

When a fault occurs and then corresponding fault recovery is to be achieved, the order of actions to be taken by maintenance personnel, such as unit replacement, is largely determined at the discretion of the maintenance personnel. In such a case, therefore, optimum maintenance for attaining the SLA and maintaining inter-user fairness is not always performed. If, for instance, a plurality of access node apparatuses are faulty at one access node station, the order of actions to be taken to achieve fault recovery should be optimized in consideration of the SLA and user fairness. However, it is difficult for the maintenance personnel to determine the optimum order of actions to be taken to achieve fault recovery.

Technologies for attaining a reliability-related SLA and assuring inter-user fairness have already been disclosed. For instance, Patent Document 1 describes a subscriber QoS control method that is designed to provide Qos services to remote subscriber terminals in accordance with a subscriber-specific SLA.

A remote diagnosis/troubleshooting system disclosed, for instance, in Patent Document 2 subjects a fault analysis/troubleshooting process to load distribution and performs troubleshooting in accordance with a fault level.

### Citation List

### Patent Literature

Patent Document 1 JP-A-2003-234770
Patent Document 2 JP-A-2008-191878

### Summary of Invention

### Technical Problem

The problem can be addressed by complying with a user-specific SLA concerning reliability while fairness is maintained among users who have signed the same SLA. Solving the problem makes it possible to provide fair and highly satisfying services to the users. The subscriber QoS control method described in Patent Document 1 aims at implementing traffic-related QoS and effectively using network resources. This method does not consider the implementation of a reliability-related SLA or the provision of fairness among users who have signed the same SLA. This method does not indicate that, when multiple faults occur for example, how prompt recovery from such multiple faults is achieved while maintaining fairness among users who have signed the same SLA.

Meanwhile, the remote diagnosis/troubleshooting system described in Patent Document 2 can perform troubleshooting in accordance with the level of an encountered fault. However, this system does not consider the implementation of a reliability-related SLA for a plurality of users or the provision of fairness among the users. Therefore, this system cannot address the aforementioned problem, as is the case with the method described in Patent Document 1.

The present invention has been made in view of the above circumstances and has objects to provide an access node monitoring control apparatus, access node monitoring system, access node monitoring method, and access node monitoring program for increasing the possibility of implementing a user-specific SLA concerning reliability while maintaining fairness among users who have signed the same SLA.

### Solution to Problem

An access node monitoring control apparatus according to the present invention monitors a plurality of access node devices that each include one or more interface cards corresponding respectively to a plurality of users. The access node monitoring control apparatus includes: SLA information storage means for storing information about reliability-related SLAs signed by the users; fault information receiving means for receiving information about faults in a device used to provide communication services to the users; fault history storage means for storing a history of faults indicated by the information received by the fault information receiving means in association with the users affected by the faults; and next maintenance operation determination means for determining the next maintenance operation in accordance with information about a currently faulty device, information about an SLA for a user affected by a fault in the faulty device, and a fault history associated with the user.

An access node monitoring system according to the present invention monitors a plurality of access node devices that each include one or more interface cards corresponding respectively to a plurality of users. The access node monitoring system includes an access node monitoring control apparatus that is connected to each of the plurality of access node devices through a communication network. The access node monitoring control apparatus includes: SLA information storage means for storing information about reliability-related SLAs signed by the users; fault information receiving means for receiving information about faults in a device used to provide communication services to the users; fault history storage means for storing a history of faults indicated by the information received by the fault information receiving means in association with the users affected by the faults; and next maintenance operation determination means for determining the next maintenance operation in accordance with information about a currently faulty device, information about an SLA for a user affected by a fault in the faulty device, and a fault history associated with the user.

An access node monitoring method according to the present invention is used to monitor a plurality of access node devices that each include one or more interface cards corresponding respectively to a plurality of users. The access node monitoring method includes the steps of: causing a storage device to store information about reliability-related SLAs signed by the users; receiving information about faults in a device used to provide communication services to the users; causing the storage device to store a history of faults indicated by the received information in association with the users affected by the faults; and determining the next maintenance operation in accordance with information about a currently faulty device, information about an SLA for a user affected by a fault in the faulty device, and a fault history associated with the user.

An access node monitoring program according to the present invention is used to monitor a plurality of access node devices that each include one or more interface cards corresponding respectively to a plurality of users. The access node monitoring program causes a computer, the computer having SLA information storage means for storing information about reliability-related SLAs signed by the users, to perform: a fault information receiving process for receiving information about faults in a device used to provide communication services to the users; a fault history registration process for causing a storage device to store a history of faults indicated by the received information in association with the users affected by the faults; and a next maintenance operation determination process for determining the next maintenance operation in accordance with information about a currently faulty device, information about an SLA for a user affected by a fault in the faulty device, and a fault history associated with the user.

### Advantages Effects of the Invention

The present invention makes it possible to increase the possibility of implementing a user-specific SLA concerning reliability while maintaining fairness among users who have signed the same SLA. As a result, fair and highly satisfying services can be provided to the users.

### Brief Description of Drawings

[FIG. 1] It depicts a block diagram illustrating an example of the overall configuration of an access node monitoring system.
[FIG. 2] It depicts a block diagram illustrating an example of a detailed configuration of an access node monitoring control apparatus 1.
[FIG. 3] It depicts a flowchart illustrating an example of an operation according to an exemplary embodiment of the present invention.
[FIG. 4] It depicts a diagram illustrating an example of faulty interface cards.
[FIG. 5] It depicts a diagram illustrating an example of the storage of fault queues 103.
[FIG. 6] It depicts a block diagram illustrating the overview of the present invention.
[FIG. 7] It depicts a block diagram illustrating another exemplary configuration of the access node monitoring control apparatus according to the present invention.
[FIG. 8] It depicts a block diagram illustrating an exemplary configuration of the access node monitoring system according to the present invention.

### Description of Embodiments

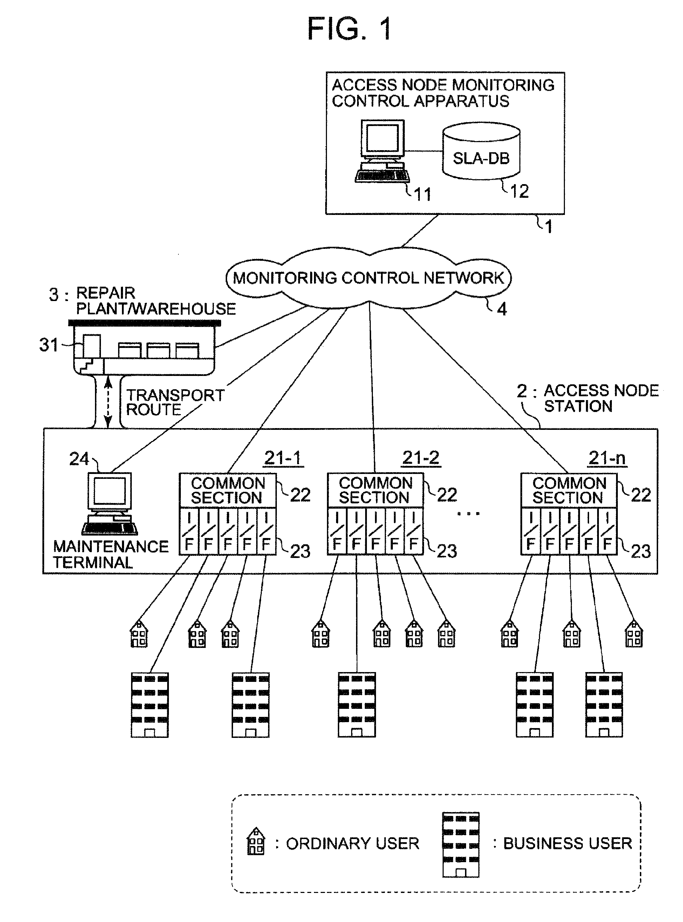

An exemplary embodiment of the present invention will now be described with reference to the accompanying drawings. FIG. 1 is a block diagram illustrating an example of the overall configuration of an access node monitoring system according to the present exemplary embodiment. The access node monitoring system shown in FIG. 1 includes an access node monitoring control apparatus 1, an access node station 2 that includes a plurality of access node devices 21, and a repair/delivery request receiving device 31 that is installed in a repair plant/warehouse 3 for interface cards 23. The access node monitoring control apparatus 1, the access node station 2, and the repair/delivery request receiving device 31 are interconnected through a monitoring control network 4 to communicate with each other. The access node monitoring control apparatus 1 is connected to the repair/delivery request receiving device 31 in the repair plant/warehouse 3 for the interface cards through the monitoring control network 4. It is assumed that there is a transport route between the access node station 2 and the repair plant/warehouse 3 for the interface cards.

In FIG. 1, two classes of users including ordinary users and business users are indicated as end users for whom an access link is formed by the interface cards 23 of the access node devices 21. However, the number of classes and the way of defining the classes may be determined as desired. It is assumed that resident maintenance personnel at the access node station 2 is watching a monitor of a maintenance terminal 24 connected to the monitoring control network.

The access node monitoring control apparatus 1 includes control means 11 and a database (SLA-DB) 12. The control means 11 is a computer having, for instance, a CPU that operates in accordance with a program. The database 12 stores, for instance, user-specific SLA information.

The control means 11 determines the priorities of maintenance operations in accordance, for instance, with the user-specific SLA information, a fault history, and a currently encountered fault, notifies the maintenance personnel of the next optimum maintenance operation, and provides control over the automatic shipment of spare parts.

At the access node station 2, the access node devices 21 and the maintenance terminal 24 are installed. The maintenance terminal 24 is operated by the maintenance personnel. The access node devices 21 each include a common section 22 and the interface cards 23.

The common section 22 exchanges a monitoring control signal with the access node monitoring control apparatus 1 through the monitoring control network. The common section 22 also exercises various setup and control functions for the local interface cards 23.

Each interface card 23 is a communication control device that provides a connected user (or more specifically, a connected user terminal) with an access link to a predetermined network such as the Internet.

The repair/delivery request receiving device 31 receives a repair request or a delivery request from the access node monitoring control apparatus 1 and performs a voucher printing process or other predetermined process as needed.

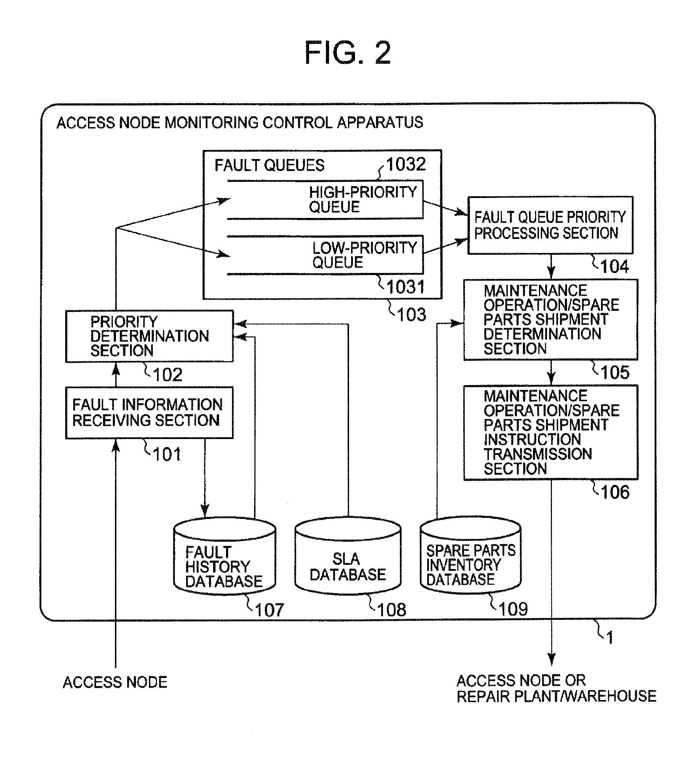

FIG. 2 is a block diagram illustrating an example of a detailed configuration of the access node monitoring control apparatus 1. Referring to the example shown in FIG. 2, the access node monitoring control apparatus 1 includes a fault information receiving section 101, a priority determination section 102, fault queues 103, a fault queue priority processing section 104, a maintenance operation/spare parts shipment determination section 105, a maintenance operation/spare parts shipment instruction transmission section 106, a fault history database 107, an SLA database 108, and a spare parts inventory database 109. The fault queues 103 include a high-priority queue 1031 and a low-priority queue 1032, which both store information about priorities of maintenance actions to be taken.

The fault information receiving section 101 receives fault information about the interface cards 23 from the access node station 2 (individual access node devices 21).

The priority determination section 102 determines the recovery priorities of faulty devices from currently encountered fault information, fault history, and SLA information.

The fault queue priority processing section 104 performs a process on the fault queues 103 (or more specifically, the high-priority queue 1031 and the low-priority queue 1032) to store fault information in order of priority.

The maintenance operation/spare parts shipment determination section 105 determines the next maintenance action from the status of the fault queues 103 and references the spare parts inventory database 109 to determine the dispatch of spare parts as needed.

The maintenance operation/spare parts shipment instruction transmission section 106 receives instructions from the maintenance operation/spare parts shipment determination section 105, transmits a maintenance operation instruction signal to the maintenance terminal 24 in order to issue a maintenance operation instruction to the maintenance personnel at the access node station 2, and transmits a spare parts shipment instruction signal to the repair/delivery request receiving device 31 installed in the repair plant/warehouse 3.

The fault history database 107 records a fault history of each device (access node device and interface card).

The SLA database 108 stores information about an SLA that is signed between each user and a service provider, who is an operator of the access node monitoring system.
In the present invention, the information about an SLA at least includes information indicated by a reliability-related index. The reliability-related index may be, for example, availability, MTTF (mean time to failure), MTTR (mean time to recovery), or a combination of these.

The spare parts inventory database 109 stores information about the inventory of spare parts for each device.

In the present exemplary embodiment, the fault information receiving section 101, the priority determination section 102, the fault queue priority processing section 104, and the maintenance operation/spare parts shipment determination section 105 are implemented, for instance, by a CPU operating in accordance with a program. The maintenance operation/spare parts shipment instruction transmission section 106 is implemented by a CPU operating in accordance with a program and a communication control device such as a network card. The fault history database 107, the SLA database 108, and the spare parts inventory database 109 are implemented, for instance, by a storage device, such as a database system, and a control section that provides access control of the storage device. The fault queues 103 which include the high-priority queue 1031 and the low-priority queue 1032 is implemented, for instance, by an internal storage device such as a RAM.

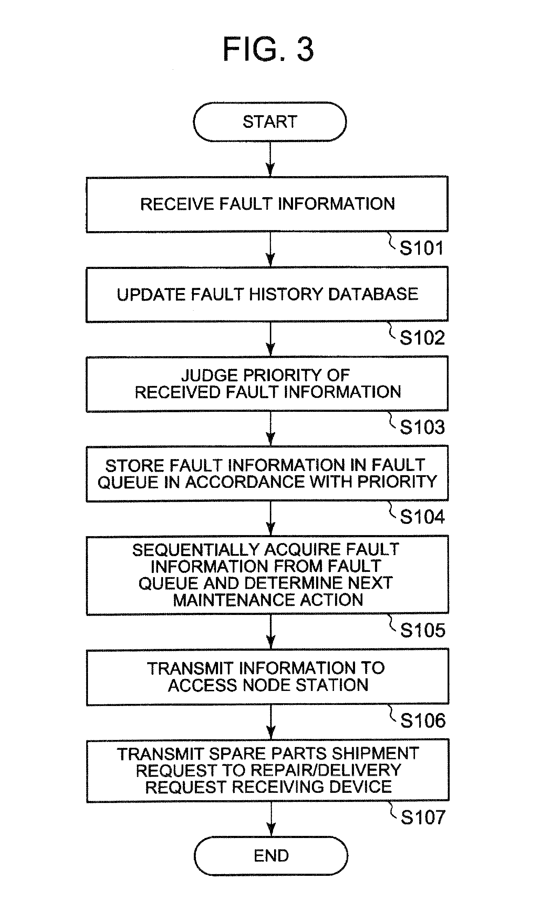

An operation of the present exemplary embodiment will now be described. FIG. 3 is a flowchart illustrating an example of an operation of the present exemplary embodiment (or more specifically, the access node monitoring control apparatus 1). For the sake of simplicity, the following description assumes that only the interface cards in the access node devices become faulty.

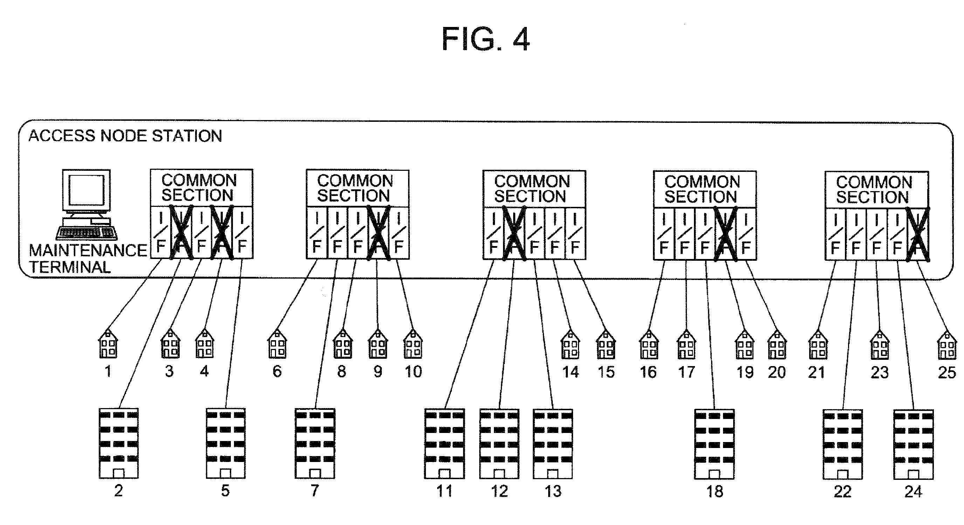

FIG. 4 is a diagram illustrating an example of faulty interface cards. In this example, it is assumed that the ordinary users' interface cards having the user numbers 25, 9, 19, and 4 became faulty in the order named, and that the business users' interface cards having the user numbers 12 and 2 became faulty in the order named. When a fault occurs in an interface card, the common section 22 of an access node device 21 detects the fault, and transmits fault information to the access node monitoring control apparatus 1 to indicate the detected fault. The fault information may also be transmitted to the maintenance terminal 24 so that the maintenance personnel can remove the faulty interface card and ship it to a repair plant.

In the access node monitoring control apparatus 1, the fault information receiving section 101 receives fault information that is transmitted from an access node device 21 (step S101). Upon receipt of the fault information, the fault information receiving section 101 updates the fault history database 107 and forwards (outputs) the received fault information to the priority determination section 102 (step S102).

Upon receipt of the fault information, the priority judgment section 102 judges recovery priorities based on the currently encountered fault information, fault history, and SLA information, and stores the fault information in the fault queues in accordance with the determination result (steps S103 and S104). The priority judgment section 102 changes as needed the order of queued items within the same class in accordance with the fault history. More specifically, the priority judgment section 102 determines the priorities of all faulty interface cards and places the fault information on the fault queues in accordance with the determined priorities. For example, a user for which the services were disrupted for an extended period of time may be placed at the beginning of the queue.

Further, when a target availability is defined as the SLA information, an actual availability may be calculated from the relationship between operating time and downtime to determine the percentage at which the SLA is satisfied (or dissatisfied). This result may be defined as the degree of SLA satisfaction. The associated fault queue may be determined in accordance with the degree of SLA satisfaction. For example, when the degree of SLA satisfaction is lower than a predetermined threshold value, the associated fault queue may be identified as the high-priority queue, and when the degree of SLA satisfaction is higher than the predetermined threshold value, the associated fault queue may be identified as the low-priority queue. An additional process may be performed, for instance, to rearrange the queued items placed on a priority-specific queue in the order from the lowest degree of SLA satisfaction to the highest. For example, a current determination result may be compared against a stored judgment history so as to change the order of queued items. As regards the MTTF and MTTR, the degree of SLA satisfaction may be similarly calculated from the relationship between target and result to determine the recovery priorities. Maintenance actions can be taken in accordance with the determined recovery priorities to fully implement a reliability SLA while maintaining fairness among users.

As another method of determining the priorities from the degree of SLA satisfaction, a priority judgment table may be used. For example, the degree of SLA satisfaction may be classified into a level of 120% or higher, a level of 120% to 100%, a level of 100% to 80%, a level of 80% to 60%, and a level of lower than 60%. The priority judgment table registering the relationship between the levels and queues may be stored for use. Values to be entered into the priority judgment table should be such that items exhibiting the high degree of SLA satisfaction are placed on the low-priority queue. If, for instance, no result is available immediately after the commissioning of a newly installed device, control may be exercised so that faults involving a high target SLA level are placed on the high-priority queue 1031.

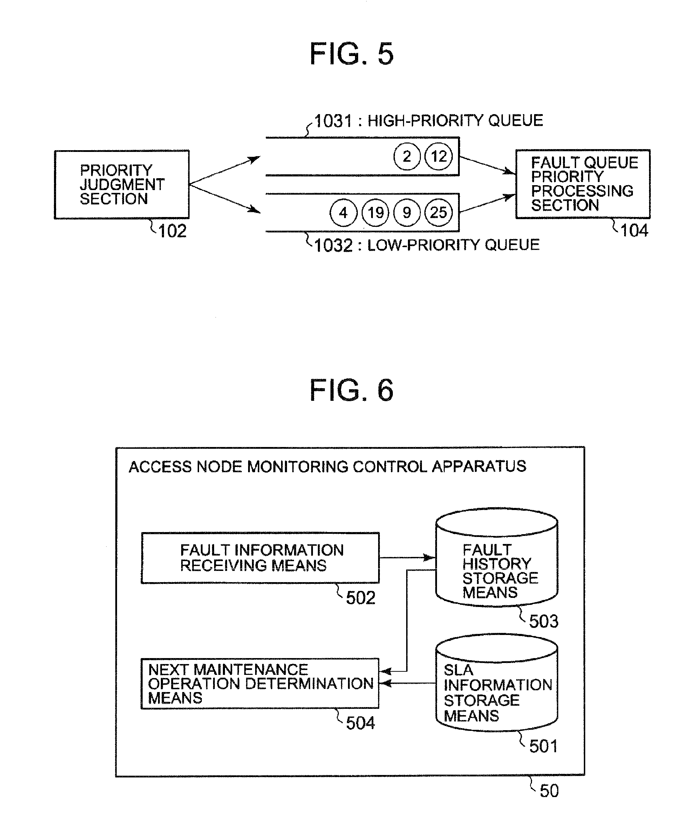

FIG. 5 is a diagram illustrating an example of the storage of fault queues 103 in the present exemplary embodiment. As shown in FIG. 5, fault information sets of the interface cards of users having the user numbers 12 and 2 are placed on the high-priority queue 1031 in the order named depending on the user class associated with faulty interface cards. Further, fault information sets of the interface cards of users having the user numbers 25, 9, 19, and 4 are placed on the low-priority queue 1032 in the order named. This means that attempts will be made to achieve fault recovery for the interface cards of users having the user numbers 12, 2, 25, 9, 19, and 4 in the order named.

Next, the maintenance operation/spare parts shipment determination section 105 determines the next maintenance action in accordance with the status of the fault queues 103 and the data of the spare parts inventory database 109 (step S105). For example, the maintenance operation/spare parts shipment determination section 105 sequentially acquires fault information sets with priority given to the high-priority queue 1031 and then determines the next maintenance action so as to achieve recovery from faults indicated by the acquired fault information sets. The next maintenance action may include an action that is taken as needed to issue a spare parts shipment request to the repair plant/warehouse.

Further, the maintenance operation/spare parts shipment determination section 105 transmits the determination result, as a maintenance operation instruction or a spare parts shipment instruction, to the access node station 2 (or more specifically, the maintenance terminal 24 and the associated access node devices 21) and the repair plant/warehouse 3 (or more specifically, the repair/delivery request receiving device 31) through the maintenance operation/spare parts shipment instruction transmission section 106 (steps S106 and S107).

In the currently used exemplary configuration, fault queue priorities are classified into two classes of users including ordinary users and business users so that business users and ordinary users are placed on the high-priority queue and low-priority queue, respectively. The maintenance operation instruction transmitted from the access node monitoring control apparatus 1 is issued to the maintenance personnel through the monitor of the maintenance terminal 24. The spare parts shipment instruction is issued to the repair/delivery request receiving device 31. It is preferred that upon receipt of the spare parts shipment instruction, the repair/delivery request receiving device 31 provide predetermined equipment control to send spare parts through the transport route.

As described above, the present exemplary embodiment makes it possible to retain user-specific SLA information indicated by a reliability-related index and issue an optimum next maintenance operation instruction as needed in accordance with the user-specific SLA information, fault history, and current fault status. Therefore, fair and highly satisfying services can be provided to the users.
In addition, the present exemplary embodiment reduces the time required for fault recovery by automating the shipment of spare parts.

It should be noted that the number of fault queues and the method of fault queue classification can be changed as appropriate. For example, three or more classes of fault queues may be used. If the three or more fault queue classes are used, the priority judgment table can be organized, for instance, to define different queues for the aforementioned levels.

A display section may be added to the common section 22 of each device and used to display the order of maintenance actions for the local device while the monitor of the maintenance terminal 24 in the access node station 2 displays the maintenance operation instruction from the access node monitoring control apparatus 1.

The present invention will now be outlined. FIG. 6 is a block diagram illustrating the overview of the present invention. The access node monitoring control apparatus 50 according to the present invention monitors a plurality of access node devices each having one or more interface cards corresponding respectively to a plurality of users, and includes SLA information storage means 501, fault information receiving means 502, fault history storage means 503, and next maintenance operation determination means 504.

The SLA information storage means 501 stores information about reliability-related SLAs signed by the users. The SLA information storage means 501 may, for example, store a target value in which at least availability, mean time to failure, or mean time to recovery is used as an index, as reliability-related SLA information.

The fault information receiving means 502 (e.g., the fault information receiving section 101) receives information about faults in a device used to provide communication services to the users. The fault information includes, for instance, information indicative of fault occurrence or recovery, the time of fault occurrence or recovery, and identification information about a faulty device.

The fault history storage means 503 (e.g., the fault history database 107) stores a history of faults indicated by the information received by the fault information receiving means 502 in association with the users affected by the faults. The users affected by the faults can be identified by referencing preregistered setup information in accordance with device identification information included in the fault information.

The next maintenance operation determination means 504 (e.g., the control means 11 incorporating the functions of the priority judgment section 102, the fault queue priority processing section 104, and the maintenance operation/spare parts shipment determination section 105) determines the next maintenance operation in accordance with information about a currently faulty device, information about an SLA for a user affected by a fault in the faulty device, and a fault history associated with the user. The next maintenance operation may be determined, for instance, by determining the next maintenance target (that is, the device to be restored to normal with the highest priority). The next maintenance target can be determined by determining the recovery priorities of faulty devices.

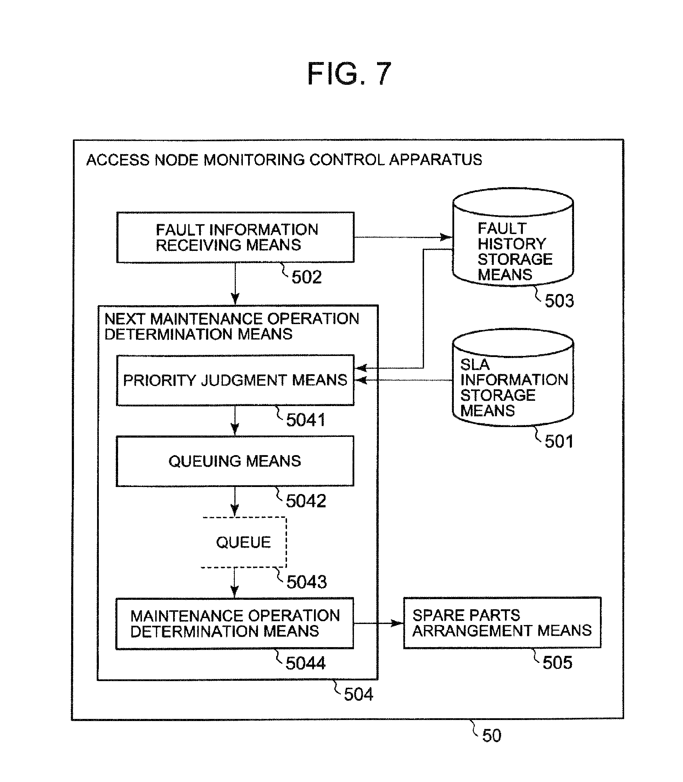

FIG. 7 is a block diagram illustrating another exemplary configuration of the access node monitoring control apparatus 50 according to the present invention. As shown in FIG. 7, the access node monitoring control apparatus 50 may further include spare parts arrangement means 505. Moreover, the next maintenance operation determination means 504 includes priority judgment means 5041, queuing means 5042, and maintenance operation determination means 5044.

The spare parts arrangement means 505 (e.g., the maintenance operation/spare parts shipment instruction transmission section 106) provides control so as to arrange for the delivery of spare parts for a faulty device. In such a configuration, the next maintenance operation determination means 504 may decide to exercise control so as to arrange for the delivery of spare parts for a faulty device as one of the maintenance actions to be taken subsequently.

The priority judgment means 5041 (e.g., the priority judgment section 102) determines the recovery priorities of all currently faulty devices indicated by the information received by the fault information receiving means 502.

The queuing means 5042 (e.g., the fault queue priority processing section 104) places the fault information about the currently faulty devices on a queue in accordance with the priorities determined by the priority judgment means 5041. For example, the queuing means 5042 may queue a plurality of pieces of fault information in order of high priority for recovery of devices indicated by the fault information.

The maintenance operation determination means 5044 (e.g., the maintenance operation/spare parts shipment determination section 105) sequentially acquires the queued pieces of fault information and determines the maintenance operation required for the recovery from faults indicated by the acquired fault information.

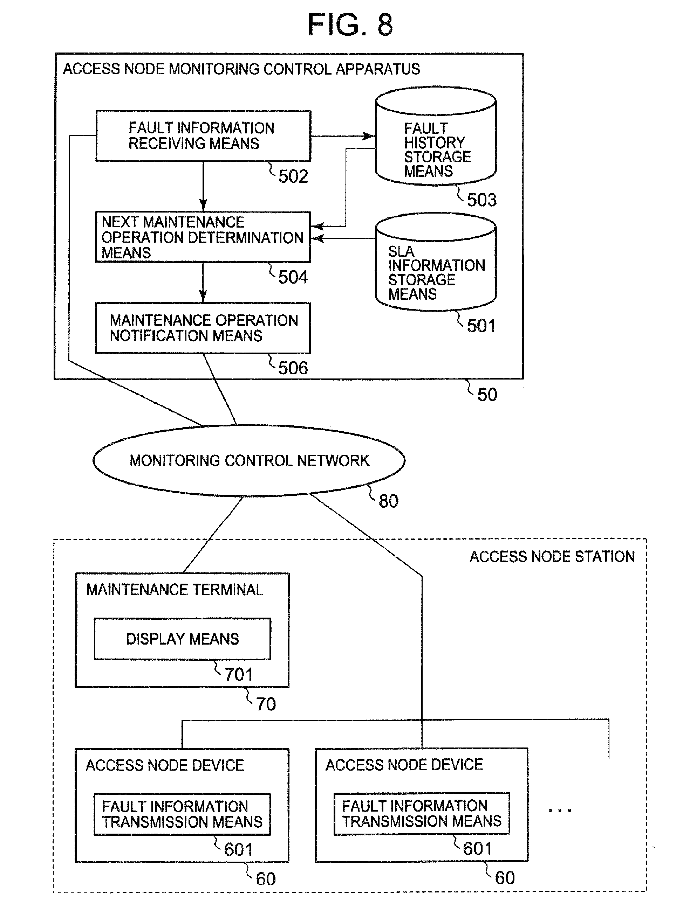

FIG. 8 is a block diagram illustrating an example of a detailed configuration of the access node monitoring system according to the present invention. The access node monitoring system shown in FIG. 8 includes a plurality of access node devices 60 and a maintenance terminal 70 in addition to the aforementioned access node monitoring control apparatus 50. The maintenance terminal 70 is installed in an access node station that includes the access node devices 60. The access node monitoring control apparatus 50 is connected to the access node devices 60 and the maintenance terminal 70 through a communication network.

In the above-described configuration, the access node monitoring control apparatus 50 may further include maintenance operation notification means 506 (e.g., maintenance operation/spare parts shipment instruction transmission section 106). The maintenance operation notification means 506 transmits information about the next maintenance action to the maintenance terminal 70.

The access node devices 60 may each include fault information transmission means 601 (e.g., common section 22). The fault information transmission means 601 transmits information about a fault in a local access node device, including a fault in an interface card inserted into the local access node device, to the access node monitoring control apparatus 50.

The maintenance terminal 70 may include display means 701 (e.g., the monitor). The display means 701 receives information indicative of the next maintenance action from the access node monitoring control apparatus and presents the received information to the maintenance personnel.

While the present invention has been described with reference to a preferred exemplary embodiment and examples thereof, it will be understood by those skilled in the art that the present invention is not limited to the preferred exemplary embodiment and examples, and that modifications and variations can be made without departing from the spirit and scope of the invention.

This application is based upon and claims the benefit of priority from Japanese Patent Application No. 2009-31949, filed on February 13, 2009, the disclosure of which is incorporated herein in its entirety by reference.

### Industrial Applicability

The present invention is preferably applicable to a system in which devices used to provide communication services to classified users are managed.

### Reference Signs List

- 1: Access node monitoring control apparatus
- 11: Control means
- 12: Database
- 101: Fault information receiving section
- 102: Priority judgment section
- 103: Fault queue
- 1031: High-priority queue
- 1032: Low-priority queue
- 104: Fault queue priority processing section
- 105: Maintenance operation/spare parts shipment determination section
- 106: Maintenance operation/spare parts shipment instruction transmission section
- 107: Fault history database
- 108: SLA database
- 109: Spare parts inventory database
- 2: Access node station
- 21: Access node device
- 22: Common section
- 23: Interface card
- 24: Maintenance terminal
- 3: Repair plant/warehouse
- 31: Repair/delivery request receiving device
- 4: Monitoring control network
- 50: Access node monitoring control apparatus
- 501: SLA information storage means
- 502: Fault information receiving means
- 503: Fault history storage means
- 504: Next maintenance operation determination means
- 5041: Priority judgment means
- 5042: Queuing means
- 5044: Maintenance operation determination means
- 505: Spare parts arrangement means
- 60: Access node device
- 601: Fault information transmission means
- 70: Maintenance terminal
- 701: Display means

## Claims

1. An access node monitoring control apparatus for monitoring a plurality of access node devices that each include one or more interface cards corresponding respectively to a plurality of users, the access node monitoring control apparatus comprising:
SLA information storage means for storing information about reliability-related SLAs signed by the users;
fault information receiving means for receiving information about faults in a device used to provide communication services to the users;
fault history storage means for storing a history of faults indicated by the information received by the fault information receiving means in association with the users affected by the faults; and
next maintenance operation determination means for determining the next maintenance operation in accordance with information about a currently faulty device, information about an SLA for a user affected by a fault in the faulty device, and a fault history associated with the user.

2. The access node monitoring control apparatus according to claim 1, wherein the next maintenance operation determination means includes:
priority judgment means for judging the recovery priorities of all currently faulty devices indicated by the information received by the fault information receiving means;
queuing means for placing the fault information about the currently faulty devices on a queue in accordance with the priorities judged by the priority judgment means; and
maintenance operation determination means for sequentially acquiring the queued pieces of fault information and determines the maintenance operation required for the recovery from device faults indicated by the acquired fault information.

3. The access node monitoring control apparatus according to claim 2, wherein the queuing means queues a plurality of pieces of fault information in order of high priority for recovery of devices indicated by the fault information.

4. The access node monitoring control apparatus according to any one of claims 1 to 3, wherein the SLA information storage means stores a target value using at least availability, mean time to failure, or mean time to recovery as an index, as reliability-related SLA information.

5. The access node monitoring control apparatus according to any one of claims 1 to 4, further comprising:
spare parts arrangement means for providing control so as to arrange for the delivery of spare parts for a faulty device;
wherein the maintenance operation determination means decides to exercise control so as to arrange for the delivery of spare parts for a faulty device as one of the maintenance actions to be taken subsequently.

6. An access node monitoring system for monitoring a plurality of access node devices that each include one or more interface cards corresponding respectively to a plurality of users, the access node monitoring system comprising:
an access node monitoring control apparatus that is connected to each of the plurality of access node devices through a communication network;
wherein the access node monitoring control apparatus includes
SLA information storage means for storing information about reliability-related SLAs signed by the users,
fault information receiving means for receiving information about faults in a device used to provide communication services to the users,
fault history storage means for storing a history of faults indicated by the information received by the fault information receiving means in association with the users affected by the faults, and
next maintenance operation determination means for determining the next maintenance operation in accordance with information about a currently faulty device, information about an SLA for a user affected by a fault in the faulty device, and a fault history associated with the user.

7. The access node monitoring system according to claim 6, further comprising:
the plurality of access node devices; and
a maintenance terminal installed in an access node station that includes the plurality of access node devices;
wherein the access node monitoring control apparatus is connected to each of the plurality of access node devices and the maintenance terminal through a communication network;
wherein the access node device includes a fault information transmission section transmits information about a fault in a local access node device, the fault including a fault in an interface card inserted into the local access node device, to the access node monitoring control apparatus;
wherein the access node monitoring control apparatus includes maintenance operation notification means for transmitting information about the next maintenance action to the maintenance terminal; and
wherein the maintenance terminal includes display means for presenting received information indicative of the next maintenance action to the maintenance personnel, the information being received from the access node monitoring control apparatus.

8. An access node monitoring method for monitoring a plurality of access node devices that each include one or more interface cards corresponding respectively to a plurality of users, the access node monitoring method comprising the steps of:
causing a storage device to store information about reliability-related SLAs signed by the users;
receiving information about faults in a device used to provide communication services to the users;
causing the storage device to store a history of faults indicated by the received information in association with the users affected by the faults; and
determining the next maintenance operation in accordance with information about a currently faulty device, information about an SLA for a user affected by a fault in the faulty device, and a fault history associated with the user.

9. The access node monitoring method according to claim 8, wherein the step of determining the next maintenance operation includes the steps of:
judging the recovery priorities of all currently faulty devices indicated by the received information about faults;
placing the fault information about the currently faulty devices on a queue in accordance with the judged recovery priorities; and
sequentially acquiring the queued pieces of fault information and determining the maintenance operation required for the recovery from device faults indicated by the acquired fault information.

10. The access node monitoring method according to claim 9, wherein a plurality of pieces of fault information are queued in order of high priority for recovery of devices indicated by the fault information.

11. The access node monitoring method according to any one of claims 8 to 10, wherein reliability-related SLA information used is a target value in which at least any one of availability, mean time to failure, and mean time to recovery is used as an index.

12. The access node monitoring method according to any one of claims 8 to 11, wherein a decision is made to exercise control so as to arrange for the delivery of spare parts for a faulty device as one of the maintenance actions to be taken subsequently.

13. An access node monitoring program for monitoring a plurality of access node devices that each include one or more interface cards corresponding respectively to a plurality of users, the access node monitoring program causing a computer having SLA information storage means for storing information about reliability-related SLAs signed by the users, to perform:
a fault information receiving process for receiving information about faults in a device used to provide communication services to the users;
a fault history registration process for causing a storage device to store a history of faults indicated by the received information in association with the users affected by the faults; and
a next maintenance operation determination process for determining the next maintenance operation in accordance with information about a currently faulty device, information about an SLA for a user affected by a fault in the faulty device, and a fault history associated with the user.

14. The access node monitoring program according to claim 13, wherein the program causing the computer, when the next maintenance operation determination process is performed, to perform
judging the recovery priorities of all currently faulty devices indicated by the information received in the fault information receiving process;
placing the fault information about the currently faulty devices on a queue in accordance with the judged recovery priorities; and
sequentially acquiring the queued pieces of fault information and determining the maintenance operation required for the recovery from device faults indicated by the acquired fault information.

15. The access node monitoring program according to claim 13 or 14, wherein the program causing the computer to perform deciding to exercise control so as to arrange for the delivery of spare parts for a faulty device as one of the maintenance actions to be taken subsequently.
